# EUROPEAN PATENT APPLICATION

(11) **EP 2 003 574 A1**
(43) Date of publication of application: **17.12.2008**
(21) Application number: 07252067.9
(22) Date of filing: 18.05.2007
(51) Int. Cl.: G06F 17/30

(54) **Method, program, and system for optimizing search results using end user keyword claiming**

(71) Applicant: United Technologies Corporation, Hartford, CT 06101 (US)
(72) Inventor: Markanthony, Joseph, Wallingford, CT 06492 (US); Karsten, Colin, Avon, CT 06001 (US)
(74) Representative: Tomlinson, Kerry John

(57) **Abstract**

An end-user keyword claiming search of electronic content stored within a distributed system is performed by allowing end-users within the distributed system to claim keywords and associate content with the claimed keywords (12-20). A keyword search matching a claimed keyword results in content associated with the claimed keyword being returned in the search results (24-28).

## Description

The present invention is related to a method and system for optimizing search results of electronic collections. In particular, the present invention provides a method that allows end-users within a distributed system to claim keywords and to define content associated with each claimed keyword.

Providing a system that allows users to search and locate specific data within a large collection of electronic content is useful in a number of applications. For instance, organizations oftentimes make use of intranets, or internal networks, to allow internal users distributed across a network to communicate and share content. An intranet run by a single organization may provide users with access to an ever-increasing amount of content. In order to find relevant documents, intranets typically offer a tool known as a search engine that aids users in searching for relevant content. A search engine typically makes use of a program known as a webcrawler that stores and indexes a collection of documents (for instance, web pages). The search engine uses search terms provided by a user to locate documents previously indexed based on relevancy to the provided search terms.

While search engines provide many benefits, because they are centrally administered and rely on computer algorithms to decide which content is relevant, situations often arise in which the content a user is seeking is not provided by a search engine result. In some instances, a word or phrase provided to a search engine returns a large number of results that make it difficult for a user to locate relevant content. Othertimes, a word or phrase provided to a search engine fails to return any results.

This problem is even more challenging in intranet applications. In contrast with the Internet, in which meta tags or data are professionally assigned to each file to allow a search engine to more easily determine the relevancy of content, meta tags in intranet applications are typically not as well organized. Thus, search engine results in intranet applications may be even more likely to provide irrelevant results.

Therefore, it would be beneficial to provide an improved search system that optimizes search results.

The present invention is a method, program, and system for providing a search system that allows end-users to claim ownership of key terms or phrases, known as keywords. End-users claiming ownership of a keyword can associate content with the claimed keyword, such that another end-user conducting a search that matches the claimed keyword is provided with content associated with the claimed keyword by the first end-user.

Certain embodiments of the invention will now be described by way of example only and with reference to the drawings.
FIG. 1A is a flowchart illustrating steps in claiming a keyword and associating content with the claimed keyword.
FIG. 1B is a flowchart illustrating steps in performing a keyword search.
FIGS. 2-7B are screen shots of graphical user interfaces of a computer application that is suitable for claiming keywords in a distributed system, and for performing a search in the distributed system.
FIG. 8 is a functional block diagram of a distributed system capable of implementing keyword claiming and searching.

Keyword claiming allows users on a distributed system to claim ownership of a particular keyword. Owners of a claimed keyword can then associate content with the claimed keyword. A search conducted on the distributed system matching a claimed keyword results in content associated with the claimed keyword being returned as part of the search results. Content associated with the claimed keyword is typically highly relevant to search terms provided by a user, thus content associated with the claimed keyword is displayed as the highest priority content (typically shown at the top of a search result page). Therefore, the present invention optimizes search results by allowing end-users of the distributed system to define content presented in response to a particular keyword. Implementing keyword claiming in a distributed system allows distributed end-users to associate content with particular keywords, resulting in a collaborative effort that improves content provided in response to a search conducted on a particular keyword.

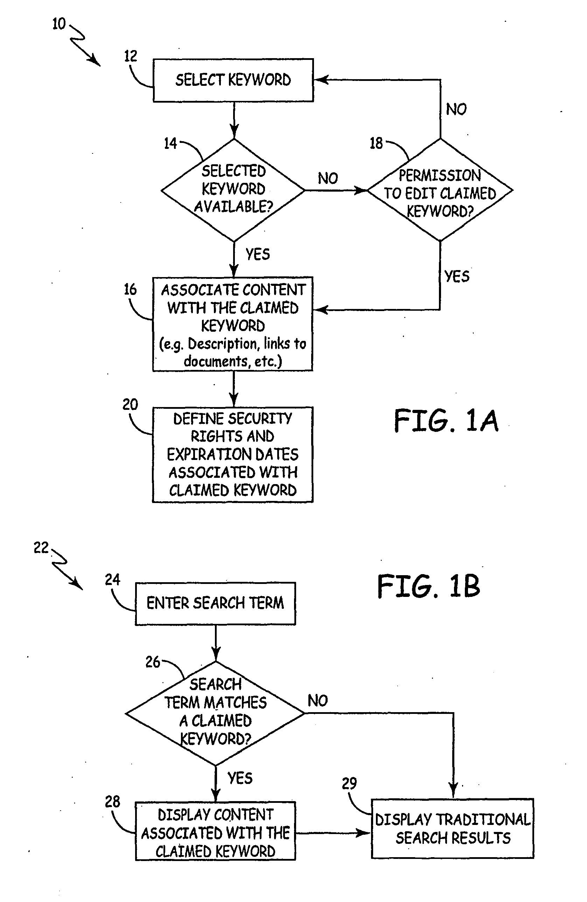

FIG. 1A is a block diagram of method 10, which illustrates steps in claiming a keyword and defining content to be associated with the claimed keyword. FIG. 1B is a block diagram of method 22, which illustrates steps for performing a keyword search in a system employing claimed keywords.

As shown in FIG. 1A at step 12, the first step in keyword claiming is for a user to select a keyword. Typically, an end-user will select a keyword representative of the electronic content that will be associated with the keyword. However, one of the benefits of this system is that electronic content associated with a claimed keyword may include content that a typical search engine would not associate with a particular keyword.

At step 14, the availability of the selected keyword (i.e., whether another end-user has already claimed the keyword) is determined. If the keyword is available, then the end-user is allowed to claim ownership of the keyword and may associate or add electronic content to the keyword at step 16. Examples of electronic content an end-user may associate with a claimed keyword include: user-defined definitions of the claimed keywords, links (i.e., electronic addresses) to applications, forms and/or templates, links to other webpages, as well as any other information the user wishes to include. If the keyword is not available (i.e., another user has already claimed ownership of the selected keyword), then at step 18 the end-user is presented with several possibilities. In some instances, the end-user may be allowed to add electronic content to the claimed keyword in addition to the electronic content already associated with the claimed keyword at step 16. Access rights are defined by the end-user that first defines a claimed keyword. In other instances, the user will differentiate the selected keyword from the claimed keyword with a further descriptive term at step 12. If the end-user believes that the claimed keyword has been improperly defined, the end-user can also submit a conflict report to a conflict committee, which tracks conflicts and determines proper use of claimed keywords.

At step 20, assuming the end-user is allowed to claim a particular keyword, the end-user defines security rights and expiration dates associated with the claimed keyword. The security profile defines whether other users are allowed to edit electronic content associated with a claimed keyword. In some instances, it may be desirable to only allow select users to edit electronic content associated with a claimed keyword. For instance, if an end-user in the travel department claims the term "travel expense report", and associates forms and other content relevant to filing a travel expense report, it may be desirable to prevent users outside of the travel department to add content associated with the claimed keyword "travel expense report." In other instances, it may be desirable to have a number of users contributing electronic content to a claimed keyword, to enrich the content provided with respect to claimed keywords.

Expiration dates allow a user defining a claimed keyword to also define the length of time the claimed keyword will remain active. For instance, if a user claims the keyword "Christmas Party", content associated with the claimed keyword becomes irrelevant after December 25. Therefore, the claimed keyword "Christmas Party" can be set to expire on December 26.

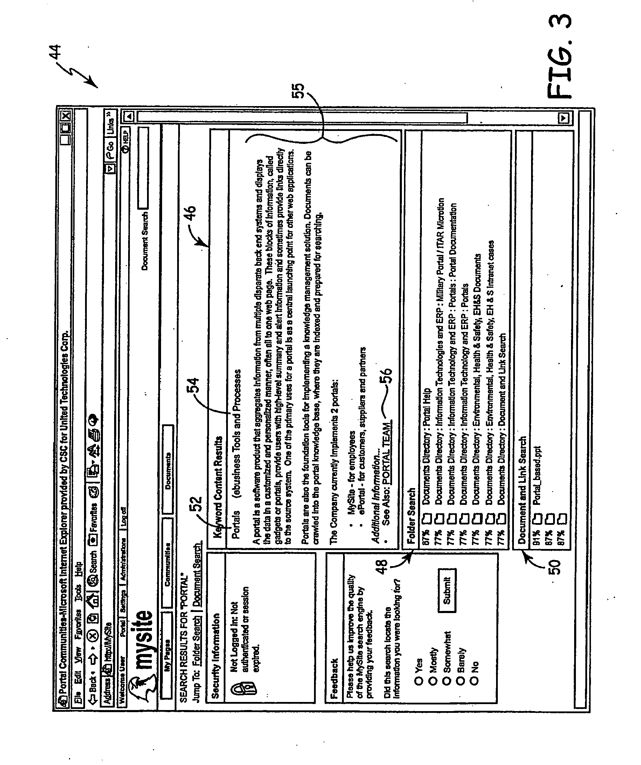

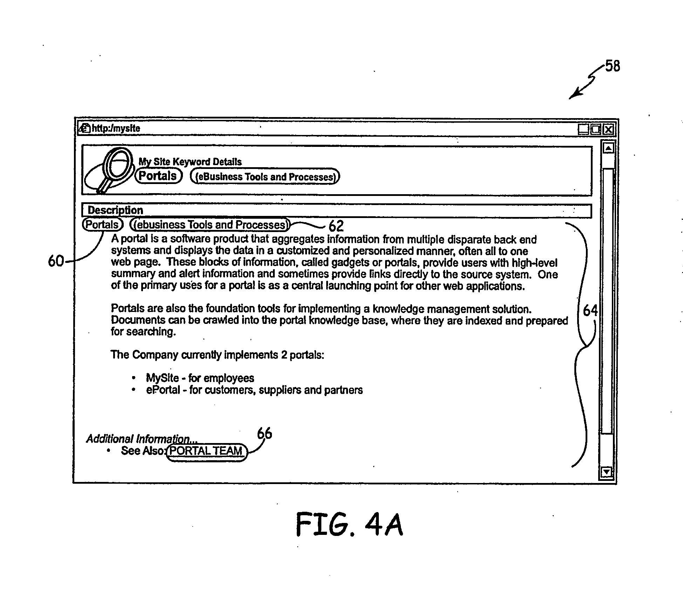

FIG. 1B is a block diagram of method 22 for conducting a search within a distributed system. At step 24, a user enters a search term or phrase. At step 26, the search term or phrase is compared against claimed keywords to determine whether the search term matches a claimed keyword. In some embodiments, a match only occurs if the search term or phrase exactly matches the claimed keyword. In other embodiments, a match may occur if the search term or phrase includes at least one of the terms found in the claimed keyword. If a match is found between the search term and a claimed keyword, then content associated with the claimed keyword is presented to the user at step 28. As discussed above, the content associated with a claimed keyword may include user-defined descriptions of the claimed keyword, electronic links to documents, forms, and applications, as well as links to other webpages. If more than one claimed keyword is found to match, then each of the matching claimed keywords is displayed along with short descriptions (shown in FIGS. 3 and 4A) of content associated with each of the claimed keywords.

If a match is not found between the search term and a claimed keyword, then results obtained by a typical search engine return documents based on the search terms entered using a relevancy algorithm at step 29. A number of search engine algorithms are commercially available for providing documents based on a relevancy algorithm. For example, search engines provided by Google, Yahoo, or Microsoft each rank results based on a determined relevancy algorithm. In one embodiment, as shown in FIG. 1B at step 29, results from a typical search engine search are returned in addition to content associated with a claimed keyword match.

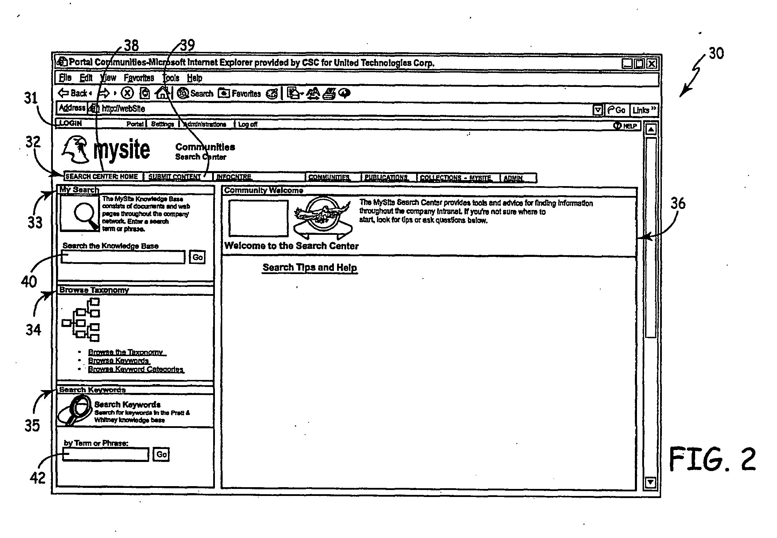

FIGS. 2-7B are screen shots of graphical user interfaces (GUIs) for a web portal that allows distributed users to search collections as well as claim ownership of keywords. Web portals are commonly used as a starting point for users accessing an organization's intranet or other distributed system. A web portal can provide personalized information and content (based on login information) that allows users to collaborate in a distributed environment. This makes intranet web portals an attractive application in which to implement a keyword claiming search system of the present invention. The ability of web portals to uniquely identify users allows web portals to associate access rights with particular users (i.e., determining content that may be accessed by a particular user). It also allows users to claim keywords and uniquely identify users that are allowed to edit or add content to a claimed keyword, discussed in more detail below. Each screenshot is identified with respect to the function of the GUI displayed.

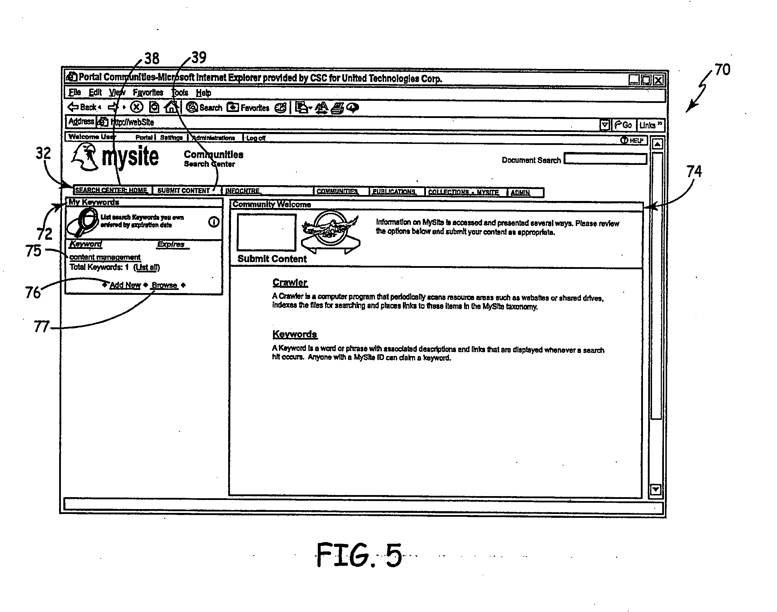

FIG. 2 is a screen shot of a search center GUI 30, which provides a user-friendly interface from which a user can institute keyword searches. Search center GUI 30 includes login link 31, menu bar 32, my search GUI 33, taxonomy GUI 34, keyword search GUI 35, and information GUI 36. Login link 31 opens a login GUI (not shown) that allows a user to provide identification to the web portal. This allows the web portal to provide personalized information to the user, as well as allowing identified users to claim ownership of keywords, discussed in more detail below. Menu bar 32 includes a number of links such as search center home link 38 and submit content link 39. By clicking on the links within menu bar 32, a user is able to navigate to different GUI's, each GUI providing a different function. For instance, by clicking on submit content link 39, submit content GUI 70 (shown in FIG. 5) is displayed to the user, providing a user-friendly interface for a user to submit content, including submitting content through keyword claiming.

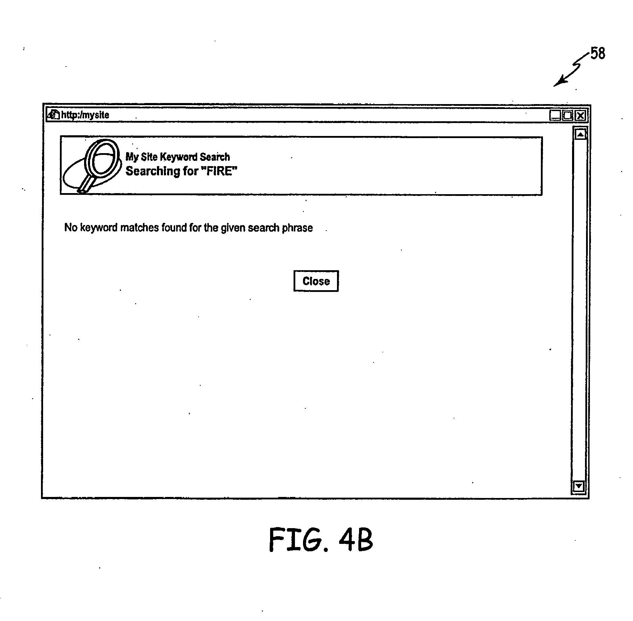

As shown in FIG. 2, search center link 38 is not underlined, indicating that the user is currently located within search center GUI 30, which provides a number of options for locating content. My search GUI 33 allows a user to enter search terms in search term input box 40. Based on search terms entered in search term input box 40, search result GUI 44 (shown in FIG. 3) is opened, providing the user with content associated with a keyword match, as well as the results of a typical search engine search. Browse taxonomy GUI 34 allows a user to browse a hierarchy of folders, as well as a list of all keywords and keyword categories. Search keyword GUI 35 allows a user to enter search terms in keyword search term box 42. Based on search terms entered in search term input box 40, keyword search result GUI 58 (shown in FIGS. 4A and 4B) are opened, providing the user with content associated with a keyword match. Search input box 42 only provides a search of content associated with a claimed keyword match.

Information GUI 36 provides information regarding search center module 30, including discussions among distributed users and tools and advice for locating information throughout the collection.

FIG. 3 shows a screenshot of search result GUI 44 which displays search results returned in response to a user entering a search term in search term input box 40 as shown in FIG. 2. Search results include keyword content results 46, folder search results 48, and document and link search results 50. If the search term entered by a user matches a claimed keyword, then keyword content results 46 displays content associated with the claimed keyword. Keyword content results 46 are shown at the top of search result GUI 44, indicating that keyword content results are the highest priority or most highly relevant results. For example, the screen shot shown in FIG. 3 was created in response to a user conducting a search on the term "portal". In this example, a previous user has claimed ownership of the keyword "portal" and associated the content shown in keyword content results 46. In this case, the owner of the claimed keyword associated the following content with the claimed keyword, which is displayed in keyword content results 46: keyword 52, short description 54, long description 55, and webpage link 56. In other embodiments the end-user could associate further content with a claimed keyword, including links to applications, forms or templates, as well as processes that the owner of the claimed keyword wishes to initiate when a search term matches a claimed keyword.

If a search matches more than one claimed keyword, then keyword search results 46 would display both claimed keywords along with short descriptions associated with each claimed keyword. This allows an end-user to quickly review claimed keywords to locate the desired content.

Folder search results 48 and document and link search results 52 show results provided by a typical search engine, in which the search engine provides results based on the search term using a relevancy algorithm. As shown in folder search results 48, folders returned by the search engine are ranked by their relevancy. Likewise, document and link search results 50 provides individual documents and links based on the search term using a similar relevancy algorithm.

Search result GUI 44 maintains the same display regardless of whether keyword match is found or not. For instance, if a keyword match is found, then keyword content results 46 displays content associated with the claimed keyword. However, if no keyword match is found, then either folder search results 48 or document and link search results 50 are displayed as the most highly relevant results. Either way, search result GUI 44 provides a user with the most relevant results in the highest priority position (top of the page).

FIGS. 4A and 4B are screen shots of keyword search result GUI 58, which displays search results returned in response to a user entering a search term in keyword search input box 42 (shown in FIG. 2). In contrast to search result GUI 44 shown in FIG. 3, only content associated with a claimed keyword is displayed in keyword search result GUI 58. As shown in FIG. 4A, in response to a keyword search on the term "portal", content associated with the claimed keyword "portal" (by the owner of the claimed keyword "portal") is displayed in keyword search GUI 58. For example, a keyword search performed on the word "portal" results in the content shown in FIG. 4A being returned, including claimed keyword 60, short description 62, long description 64, and webpage link 66.

As shown in FIG. 4B, if a search term does not match a claimed keyword, then keyword search result GUI 58 indicates that no keyword matches where found for the given search phrase. In contrast to search terms entered in search term window 40 (as shown in FIG. 2), which initiates a typical relevancy search, search terms entered in search term window 42 (as shown in FIG. 2) only returns results of claimed keyword matches.

FIG. 5 is a screenshot of submit content GUI 70, which provides a user-friendly interface to assist users in making content available to other users of the distributed system. One aspect of this process includes allowing users to claim ownership of keywords and to associate content with the claimed keywords. Submit content GUI 70 includes menu bar 32 (as shown in FIG. 2), as well as keyword portlet 72, and information GUI 74. Menu bar 32 provides the same function discussed with respect to FIG. 2, except submit content link 39 is no longer underlined, indicating the user is operating within submit content GUI 70.

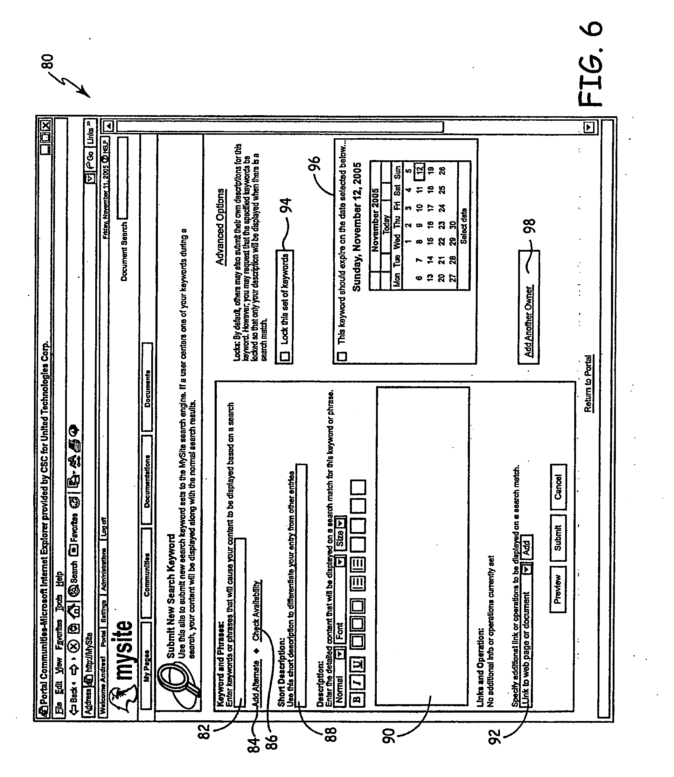

A portlet is a web component that displays relevant information to a user logged into the web portal. Keyword portlet 72 provides information to a logged in user regarding claimed keywords owned by the user. For example, keyword portlet 72 shown in FIG. 5 indicates that the current user has claimed ownership of the keyword "content management", as indicated by link 75 titled "content management". By clicking on link 75, the end-user is able to edit content associated with the claimed keyword as a well as define security rights and expiration dates associated with the claimed keyword. If a logged in user has not claimed ownership of any keywords, then keyword portlet 72 will indicate that the user does not currently own any claimed keywords. Keyword portlet 72 also provides information regarding the expiration date of any claimed keywords. In the example shown in FIG. 5, the claimed keyword "content management" does not have an expiration date. Finally, keyword portlet 72 includes add new keyword link 76 and a browse link 77. Add new keyword link 76 opens submit new keyword GUI 80 shown in FIG. 6, which provides a user-friendly interface for claiming a particular keyword as well as associating content with the claimed keyword. The browse link allows a user to browse a list of all claimed keywords.

Information GUI 74 provides information regarding submitting content to the portal, including information regarding how to submit content by claiming keywords.

FIG. 6 is a screenshot of submit new keyword GUI 80, which provides a user-friendly interface for claiming a keyword and selecting content to be associated with the claimed keyword. Submit new keyword GUI 80 includes keyword entry box 82, add alternate link 84, check availability link 86, short description entry box 88, detailed content 90, add content drop down menu 92, security lock checkbox 94, keyword expiration date 96, and add owner link 98.

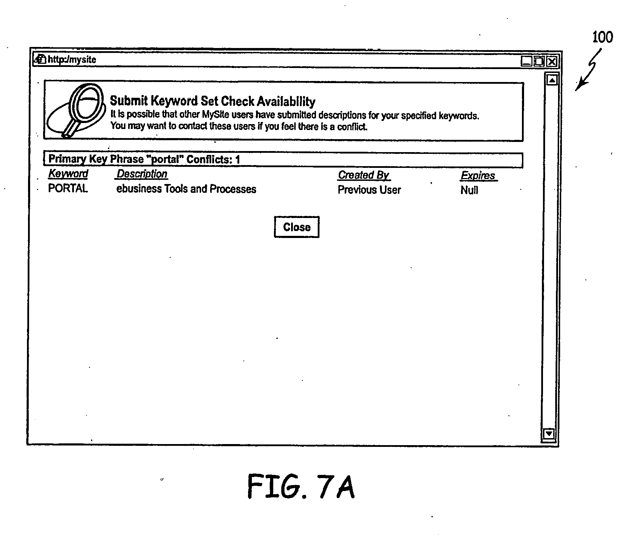

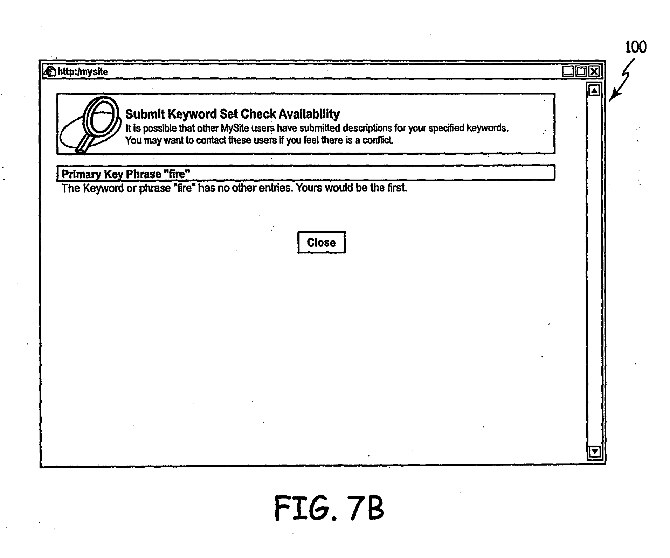

To claim a keyword, a user enters the keyword in keyword entry box 82. After entering a keyword in keyword entry box 82, the user may click check availability link 86 to open an availability GUI (shown in FIGS. 7A and 7B), which indicates whether the keyword selected by the user has been previously claimed by another user.

Short description entry box 88 allows the user to enter a short description of the claimed keyword or content associated with the claimed keyword. The short description (for instance, short description 62 shown in FIG. 3) is displayed along with the claimed keyword when a search result returns more than one claimed keyword. This allows a user conducting a search to quickly determine whether the content they are searching for is associated with a particular claimed keyword.

Detailed description entry box 90 allows the end-user to enter detailed content the end-user wishes to associate with a claimed keyword. For example, as shown in FIG. 4A, detailed description 64 displays content added by the owner of the claimed keyword using detailed description entry box 90.

Add content drop down menu 92 allows a user to specify links to documents, templates, form, web pages, or specific processes to be associated with the claimed keyword. Any links associated with a claimed keyword are displayed along with the detailed description as part of the content associated with the claimed keyword.

Security lock checkbox 94 allows a user claiming a keyword to select whether other end-users should be allowed to add content to a particular claimed keyword. In some instances, it may be desirable to prevent other end-users from adding content associated with a claimed keyword. In other instances, it may be desirable to allow other end-users to contribute or edit content associated with a claimed keyword. If no determination is made, the default position is to allow other end-users to edit content.

Keyword expiration date GUI 96 allows a user claiming a keyword to dictate when the claimed keyword will expire, or no longer be valid. If no expiration date is entered, then no expiration date is assigned to the claimed keyword, and it will remain valid indefinitely.

Add owner link opens an add owner GUI, which provides an interface that allows a user claiming a keyword to provide identification of users that are allowed to add and edit content associated with the claimed keyword.

FIGS. 7A and 7B are screenshots of check availability GUI 100. FIG. 7A illustrates the results of a keyword selected by a user conflicting with a previously claimed keyword. The previously claimed keyword is displayed along with a short description of the previously claimed keyword, the owner of the previously claimed keyword, and the expiration date of the previously claimed keyword. As shown in FIG. 7B, if the keyword selected by a user does not conflict with any previously claimed keywords, then GUI 100 indicates that the selected keyword has not been claimed by another user.

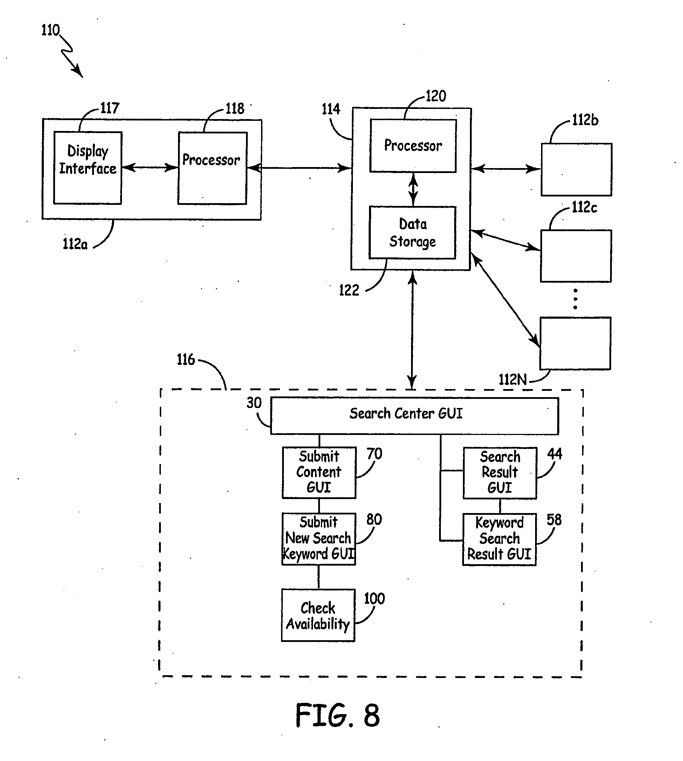

FIG. 8 is a functional block diagram illustrating a distributed system 110 suitable for implementation of a distributed keyword claiming system of the present invention. System 110 includes a plurality of terminals 112a, 112b, 112c ...112N (collectively, terminals 112) and central server 114. Central server 114 operates claimed keyword search application 116, and provides graphical user interfaces (shown in FIGS. 2-7B) associated with search program 116 to end-users at terminals 112.

Terminals 112 are each connected to communicate with central server 114, allowing distributed end-users to access central server 114 and run claimed keyword search application 116. Terminal 112a illustrates additional detail included in each of the terminals 112, including user interface 117 connected to processor 118. User interface 117 allows a user to operate and access claimed keyword search application 116, and may include devices such as keyboards, input pads, display monitors, and the like. Processor 118 is a computer processor configured to communicate with user interface 117 and central server 114.

Central server 114 includes processor 120 and data storage 122. Processor 120 is a computer processor configured to communicate with database 122. Database 122 provides storage for data such as claimed keywords and content associated with each claimed keyword. Because system 110 is distributed, content associated with claimed keywords may also be stored external to database 122, such as within terminals 112 or other servers (not shown).

As discussed above with respect to FIGS. 2-7B, claimed keyword search application 116 includes a number of user-friendly GUI's that allow the user to search a collection of documents and to claim keywords and associate content with each claimed keyword. User-friendly GUI's include search center GUI 30, search result GUI 44, keyword search result GUI 58, submit content GUI 70, submit new keyword GUI 80, and check availability GUI 100, as well as others not shown, such as a login GUI and a browse keywords GUI. Claimed keyword search application 116 is stored in central server 114, allowing it to be distributed to users at various terminals 112.

Although the present invention has been described with reference to preferred embodiments, workers skilled in the art will recognize that changes may be made in form and detail without departing from the scope of the invention, which is defined by the claims.

## Claims

1. A method of providing search results based on end-user claimed keywords, the method comprising:
storing a claimed keyword selected by a first end-user on a distributed system (12-20); and
storing content selected by the first end-user to be associated with the claimed keyword, such that a second end-user implementing a keyword search matching the claimed keyword is provided with the content associated with the claimed keyword by the first end-user (24-28).

2. The method of claim 1, further including:
performing (14) an availability search to determine whether the claimed keyword selected by the first end-user has been previously claimed by another end-user on the distributed system.

3. The method of claim 2, wherein performing an availability search includes:
determining (18) whether the first end-user has permission to edit content associated with the claimed keyword if the availability search determines the keyword has been previously claimed by another end-user on the distributed system, wherein if the first end-user does not have permission to edit content associated with the claimed keyword then the first end-user is directed (12) to submit a modified claimed keyword to distinguish it from the keyword previously claimed by the other end-user.

4. The method of claim 1, 2 or 3 wherein storing content selected by the first end-user to be associated with the claimed keyword includes one or more of:
storing a description of the electronic content selected by the first end-user to be associated with the claimed keyword;
storing address links corresponding to documents selected by the first end-user to be associated with the claimed keyword;
storing address links corresponding to internet addresses selected by the first end-user to be associated with the claimed keyword; and
storing applications or processes selected by the first end-user to be associated with the claimed keyword.

5. The method of claim 1, 2, 3 or 4 wherein storing content selected by the first end-user to be associated with the claimed keyword includes:
storing instructions selected by the first end-user regarding whether other end-users are allowed to associate electronic content with the claimed keyword.

6. The method of any preceding claim, wherein storing content selected by the first end-user to be associated with the claimed keyword includes:
storing instructions selected by the first end-user regarding the expiration date of the claimed keyword.

7. The method of any preceding claim, wherein storing content selected by the first end-user to be associated with the claimed keyword includes:
storing identifying information of other end-users selected by the first end-user that are allowed to edit the claimed keyword and associated content with the claimed keyword.

8. The method of any preceding claim, further including:
displaying content associated with the claimed keyword by the first end-user when a second end-user initiates a keyword search that matches the claimed keyword.

9. An end-user-operated computer program for administering a distributed search system, the program comprising:
an add content graphical user interface (GUI) (80) configured to receive input regarding claimed keyword selection and user-specified content associated with a selected claimed keyword;
a search GUI (30) configured to receive search terms; and
a search results GUI (44) configured to receive search term inputs from the search GUI, and further configured to display user-specified content associated with the selected claimed keyword if the search term inputs match the claimed keyword.

10. The end-user-operated computer program of claim 9, further including:
an availability GUI (100) configured to receive the claimed keyword from the add content module, and further configured to generate a report regarding whether the selected claimed keyword has previously been claimed by another end-user.

11. The end-user operating computer program of claim 9 or 10, further including:
an expiration GUI (96) configured to receive input regarding an expiration date associated with the selected claimed keyword, wherein after the expiration date, a search performed on the selected claimed keyword will no longer return the user-specified content.

12. The end-user operated computer program of claim 9, 10 or 11 wherein the add content GUI includes:
a short description field (88) configured to receive input from an end-user regarding content associated with the selected claimed keyword;
a long description field (90) configured to receive input from the end-user regarding content associated with the selected claimed keyword; and
an add link field (92) configured to receive input from the end-user regarding content associated with the selected claimed keyword.

13. The end-user operated computer program of claim 9, 10, 11 or 12 wherein the add content GUI includes:
a security GUI (94) configured to receive input regarding whether other end-users are allowed to add and edit content associated with the selected claimed keyword.

14. A system for providing claimed keyword searching, the system comprising:
a central server (114) for storing and distributing a claimed keyword search application (116); and
a plurality of terminals (112a-N) connected to communicate with the central server, wherein the claimed keyword search application (116) stored by the central server (114) is made available to each of the plurality of terminals (112a-N), wherein end-users at the plurality of terminals can claim keywords and associate content with the claimed keywords such that an end-user at one of the plurality of terminals conducting a keyword search matching one of the claimed keywords is presented with the content associated with the claimed keyword.

15. The system of claim 14, wherein each of the plurality of terminals includes:
a user interface (117) for allowing end-users to access the claimed keyword search application; and
a processor (118) configured to communicate with the user interface and the central server.

16. The system of claim 14, wherein the central server includes:
storage for storing the claimed keyword search application; and a processor (120) configured to communicate with the storage and the plurality of user terminals (112a-N).

17. The system of claim 16, comprising a database (122) for storing the claimed keywords and content associated with each claimed keyword.
